# EUROPEAN PATENT APPLICATION

(11) **EP 4 461 989 A1**
(43) Date of publication of application: **13.11.2024**
(21) Application number: 23763195.7
(22) Date of filing: 08.02.2023
(51) Int. Cl.: F16F 15/08

(54) **VIBRATION DAMPING DEVICE AND MANUFACTURING METHOD FOR VIBRATION DAMPING DEVICE**

(30) Priority: 04.03.2022 JP 2022033085
(71) Applicant: Sumitomo Riko Company Limited, Komaki-shi, Aichi 485-8550 (JP)
(72) Inventor: MORI, Kentaro, Komaki-shi, Aichi 485-8550 (JP)
(74) Representative: SSM Sandmair
(86) International application number: PCT/JP2023/004238
(87) International publication number: WO 2023/166933

(57) **Abstract**

The present invention provides a vibration damping device that can inhibit component loosening and inhibit the occurrence of slipping with an even simpler configuration. This vibration damping device comprises: a plate-shaped first attachment member 30 that has a first fastening hole 34; a plate-shaped second attachment member 40 that has a stopper hole 44; a pair of rubber elastic bodies 20, 20 that connect the first attachment member 30 and the second attachment member 40 between facing surfaces on both end sides of said members; a stopper member 61 that has a second fastening hole 62; and a shaft member 50 that fastens the stopper member 61 to the first attachment member 30. A plurality of protrusions 52, 54 disposed at prescribed intervals in the circumferential direction are provided to a press-fit fixing section of the shaft member 50 and the first fastening hole 34 and second fastening hole 62. The shaft member 50 is fixed to the first attachment member 30 and the stopper member 61 by bringing the protrusions 52, 54 into contact with said members.

## Description

### Technical Field

The present invention relates to a vibration damping device and a manufacturing method for a vibration damping device.

### Background Art

Conventionally, a vibration damping device has been known, which is attached to a vehicle frame such as a cross member to support a power unit such as an engine or transmission, and is equipped with a support rubber elastic body (insulator) that damps vibrations from the power unit so that they are not transmitted to the vehicle body, and a stopper that restrains excessive displacement of the support rubber elastic body.

For example, in JP H09-151991 A (Patent Document 1), as a type of anti-vibration support device for vehicles, a plate-shaped first support metal fitting and second support metal fitting, a pair of block-shaped mount body rubbers vulcanized and bonded together in a state where they are sandwiched top and bottom by the first support metal fitting and second support metal fitting, a circular flange portion, and a stopper portion. The circular flange, the connecting bracket, the circular flange, the connecting bracket, and the second support bracket are connected with a bolt and nut.

### Prior Art Documents

### Patent Documents

Patent Document 1: JP H09-151991 A

### Summary of the Invention

### Problem to be Solved by the Invention

By the way, in the vehicle anti-vibration support device of Patent Document 1, when the rubber layer of the first support bracket repeatedly collides with the connecting bracket due to displacement of the first support bracket in the front-rear and up-down directions of the vehicle, slippage occurs between the first support bracket and the connecting bracket, causing loosening in the screwing between the bolts and nuts, resulting in parts falling off or the function of regulating constant displacement of the vehicle in the front-rear and up-down directions due to loosening (rattling) and falling off may not work, resulting in a decrease in durability.

Therefore, an object of the present invention is to provide a vibration damping device and a manufacturing method for the same, which has a simpler configuration, and which can maintain the stopper function by suppressing the occurrence of slippage and loosening of parts, and can increase the durability of the rubber elastic body by reducing or preventing excessive stress to the rubber.

### Means for Solving the Problem

In order to achieve the above object, a vibration damping device according to a first aspect of the present invention comprises: a plate-shaped first attachment member having a first fastening hole penetrating in an axial direction; a second attachment member being a plate-shaped member arranged spaced apart from the first attachment member in the axial direction and having a stopper hole with a hole diameter larger than a hole diameter of the first fastening hole, the stopper hole penetrating in the axial direction and overlapping the first fastening hole in a projection of the axial direction; a pair of rubber elastic bodies connecting facing surfaces of both end sides of the first attachment member and both end sides of the second attachment member, respectively; a stopper member being a cylindrical member having a second fastening hole penetrating in the axial direction, the stopper member being inserted into the stopper hole and arranged with its outer peripheral surface facing an inner peripheral surface of the stopper hole; and a shaft member inserted into the first fastening hole and the second fastening hole to fasten the stopper member to the first attachment member, wherein a plurality of first protrusions are formed at a predetermined interval in a circumferential direction, on one of either an outer peripheral surface of the shaft member or an inner peripheral surface of the first fastening hole, and in a state where the shaft member is inserted into the first fastening hole, the plurality of first protrusions are in contact with the other of either the outer peripheral surface of the shaft member or the inner peripheral surface of the first fastening hole, a plurality of second protrusions are formed on one of either the outer peripheral surface of the shaft member or the inner peripheral surface of the second fastening hole at a predetermined interval in the circumferential direction, and in a state where the shaft member is inserted into the second fastening hole, the plurality of second protrusions are in contact with the other of either the outer peripheral surface of the shaft member or the inner peripheral surface of the second fastening hole.

According to the first aspect, a plurality of first protrusions are formed at a predetermined interval in a circumferential direction, on one of either an outer peripheral surface of the shaft member or an inner peripheral surface of the first fastening hole, and in a state where the shaft member is inserted into the first fastening hole, the plurality of first protrusions are in contact with the other of either the outer peripheral surface of the shaft member or the inner peripheral surface of the first fastening hole. Further, a plurality of second protrusions are formed on one of either the outer peripheral surface of the shaft member or the inner peripheral surface of the second fastening hole at a predetermined interval in the circumferential direction, and in a state where the shaft member is inserted into the second fastening hole, the plurality of second protrusions are in contact with the other of either the outer peripheral surface of the shaft member or the inner peripheral surface of the second fastening hole. Therefore, by suppressing the occurrence of slippage and preventing the loosening of parts, the stopper function is maintained, reducing or preventing excessive stress on the rubber and thereby increasing the durability of the rubber elastic body.

In a second aspect, in the vibration damping device according to the first aspect, each of the plurality of first protrusions and the plurality of second protrusions are both formed on the outer peripheral surface of the shaft member or the inner peripheral surfaces of the first fastening hole and the second fastening hole, the plurality of first protrusions are formed to extend in the axial direction, and the plurality of second protrusions are formed to extend in the axial direction in a state of being continuous with the plurality of first protrusions.

According to the second aspect, since the plurality of first protrusions are formed to extend in the axial direction, and the plurality of second protrusions are formed to extend in the axial direction in a state of being continuous with the plurality of first protrusions, the outer peripheral surface of the shaft member and the inner peripheral surface of the second fastening hole are fixed by the first protrusions, and the outer peripheral surface of the shaft member and the inner peripheral surface of the second fastening hole are fixed by the second protrusions in continuous with the first protrusions. Therefore, the outer peripheral surface of the shaft member, the inner peripheral surface of the first fastening hole, and the inner peripheral surface of the second fastening hole are integrated and fixed, thereby the occurrence of slippage and the loosening of parts is suppressed, thereby the stopper function is maintained, and excessive stress to the rubber is reduced or prevented, thereby the durability of the rubber elastic body can be increased.

In a third aspect, in the vibration isolating device according to the first or second aspect, the shaft member has a flange portion arranged at one end in the axial direction, and the plurality of first protrusions are formed from a base of the flange portion on the outer peripheral surface of the shaft member.

According to the third aspect, since the plurality of first protrusions are formed from the base of the flange portion disposed at one end of the shaft member in the axial direction, the flange portion comes into contact with the plate-shaped first attachment member having the first fastening hole penetrating in the axial direction. Therefore, in the part where slippage occurs, the outer peripheral surface of the shaft member, the inner peripheral surface of the first fastening hole, and the flange come into contact, and are integrated and fixed, and further because of the formation from the base, the contact distance between the plurality of first protrusions and the inner peripheral surface of the first fastening hole is increased, thereby the occurrence of slippage is suppressed, and the stopper function is maintained, reducing or preventing excessive stress to the rubber, thereby the durability of the rubber elastic body can be increased.

In a fourth aspect, in the vibration isolating device according to any one of the first to third aspects, the plurality of second protrusions are formed on the outer peripheral surface of the shaft member, and the shaft member has a hardness greater than a hardness of the stopper member, and an outer diameter including the plurality of second protrusions is larger than the hole diameter of the second fastening hole.

According to the fourth aspect, since the hardness of the shaft member is greater than the hardness of the stopper member, the second protrusions formed on the outer peripheral surface of the shaft member is bitten (press-fitted) into the second fastening hole formed on the stopper member and are firmly fixed. Furthermore, since the outer diameter including the plurality of second protrusions formed on the outer peripheral surface of the shaft member is made larger than the second fastening hole, the second protrusions formed on the outer peripheral surface of the shaft member is bitten (press-fitted) into the inner peripheral surface of the second fastening hole formed in the stopper member and are firmly fixed. Therefore, the occurrence of slippage is suppressed, and the loosening of parts is suppressed, thereby maintaining the stopper function, thereby reducing or preventing excessive stress to the rubber, thereby increasing the durability of the rubber elastic body.

In a fifth aspect, in the vibration damping device according to any one of the first to fourth aspects, the plurality of first protrusions are formed on the outer peripheral surface of the shaft member, and the shaft member has a hardness greater than a hardness of the first attachment member, and an outer diameter including the plurality of first protrusions is larger than the hole diameter of the first fastening hole.

According to the fifth aspect, since the hardness of the shaft member is greater than the hardness of the first attachment member, the first protrusions formed on the outer peripheral surface of the shaft member are bitten (press-fitted) into the first fastening hole formed in the first attachment member and are firmly fixed. Furthermore, since the outer diameter including the plurality of first protrusions formed on the outer peripheral surface of the shaft member are made larger than the first fastening hole, the first protrusions formed on the outer peripheral surface of the shaft member are bitten (press-fitted) into the inner peripheral surface of the first fastening hole formed in the first attachment member and is firmly fixed. Therefore, the occurrence of slippage is suppressed, and the loosening of parts is suppressed, thereby maintaining the stopper function, thereby reducing or preventing excessive stress to the rubber, thereby increasing the durability of the rubber elastic body.

A manufacturing method for a vibration damping device according to a sixth aspect of the present invention includes: a main body portion preparation step of preparing a main body portion including a plate-shaped first attachment member having a first fastening hole penetrating in an axial direction, a second attachment member being a plate-shaped member arranged spaced apart from the first attachment member in the axial direction and having a stopper hole with a hole diameter larger than a hole diameter of the first fastening hole, the stopper hole penetrating in the axial direction and overlapping the first fastening hole in a projection of the axial direction, and a pair of rubber elastic bodies connecting facing surfaces of both end sides of the first attachment member and both end sides of the second attachment member, respectively; and a stopper member arrangement step of press-fitting a shaft member with a plurality of protrusions extending in the axial direction at a predetermined interval on its outer peripheral surface, into the first fastening hole and the second fastening hole, while a cylindrical stopper member having a second fastening hole penetrating in the axial direction is inserted into the stopper hole, such that the outer peripheral surface of the stopper member is arranged to face the inner peripheral surface of the stopper hole, while the plurality of protrusions are brought into contact with the inner peripheral surface of the first fastening hole and the inner peripheral surface of the second fastening hole.

According to the sixth aspect of the present invention, by press-fitting the shaft member with the plurality of protrusions extending in the axial direction into the first fastening hole formed in the first attachment member and the second fastening hole formed in the cylindrical stopper member, and bringing the plurality of protrusions into contact with and biting them into the inner peripheral surface of the first fastening hole and the inner peripheral surface of the second fastening hole, the first attachment member and the stopper member can be fixed. As a result, the first attachment member and the stopper member are integrated, suppressing the occurrence of slippage and the loosening of parts, the stopper function is maintained, and thereby excessive stress to the rubber is reduced or prevented, thereby the durability of the rubber elastic body can be increased.

A manufacturing method for a vibration damping device according to a seventh aspect of the present invention includes: a step of preparing a main body portion including a first attachment member having a first fastening hole in a central part thereof and a second attachment member having a stopper hole in a central part thereof, wherein the first attachment member and the second attachment member are arranged facing each other and connected by a pair of rubber elastic bodies at both side parts of the first attachment member and the second attachment member; a step of preparing a stopper member having a second fastening hole penetrating in an axial direction, wherein a lower end surface of the stopper member serves as an overlay surface with an upper surface of the central part of the first attachment member, and an upper end part of the stopper member is inserted with a gap into the stopper hole of the second attachment member; a step of preparing a shaft member having a plurality of protrusions formed on an outer peripheral surface at a predetermined interval in the circumferential direction and extending in the axial direction, the shaft member being to be inserted into the first fastening hole of the first attachment member and the stopper hole of the stopper member; a step of press-fitting the shaft member into the first fastening hole to bring the plurality of protrusions into contact with the inner peripheral surface of the first fastening hole to fix them, and a step of press-fitting the shaft member into the second fastening hole to bring the plurality of protrusions into contact with the inner peripheral surface of the second fastening hole to fix them.

### Effect of the Invention

According to the vibration damping device of the present invention, the plurality of first protrusions and the plurality of second protrusions are in contact with a mating member, thereby suppressing the occurrence of slippage and suppressing loosening of parts, thereby maintaining the stopper function, thereby reducing or preventing excessive stress to the rubber, the durability of the rubber elastic body can be increased.

According to the manufacturing method for a vibration damping device of the present invention, by press-fitting a shaft member with a plurality of protrusions extending in the axial direction at a predetermined interval on its outer peripheral surface into the first fastening hole and the second fastening hole, and bringing the plurality of protrusions into contact with and biting them into the inner peripheral surface of the first fastening hole and the inner peripheral surface of the second fastening hole, the occurrence of slippage is suppressed and the stopper function is maintained, and thereby excessive stress to the rubber is reduced or prevented, thereby the durability of the rubber elastic body can be increased.

### Brief Description of Drawings

Figure 1 is a perspective view diagram showing a vibration damping device as an embodiment of the present invention.
Figure 2 is a front view diagram of the vibration damping device shown in figure 1.
Figure 3 is a top view diagram of the vibration damping device shown in figure 1.
Figure 4 is a longitudinal sectional view diagram taken along line IV-IV in figure 3.
Figure 5 is a front view diagram showing a shaft member in the vibration damping device shown in figure 1.
Figure 6 is a sectional view diagram taken along line VI-VI in figure 5.
Figure 7 is a sectional view diagram illustrating a state in which a vibrating body is loaded on the vibration damping device shown in figure 1.
Figure 8 is a perspective view diagram illustrating a main body preparation step for preparing the main body portion of the vibration damping device shown in figure 1.
Figure 9 is a perspective view diagram illustrating a step of arranging the stopper member of the vibration damping device shown in figure 1.

### Description of Embodiments

Embodiments of the present invention are described below based on the drawings. First, the structure of a vibration damping device to which the present invention is applied will be explained.

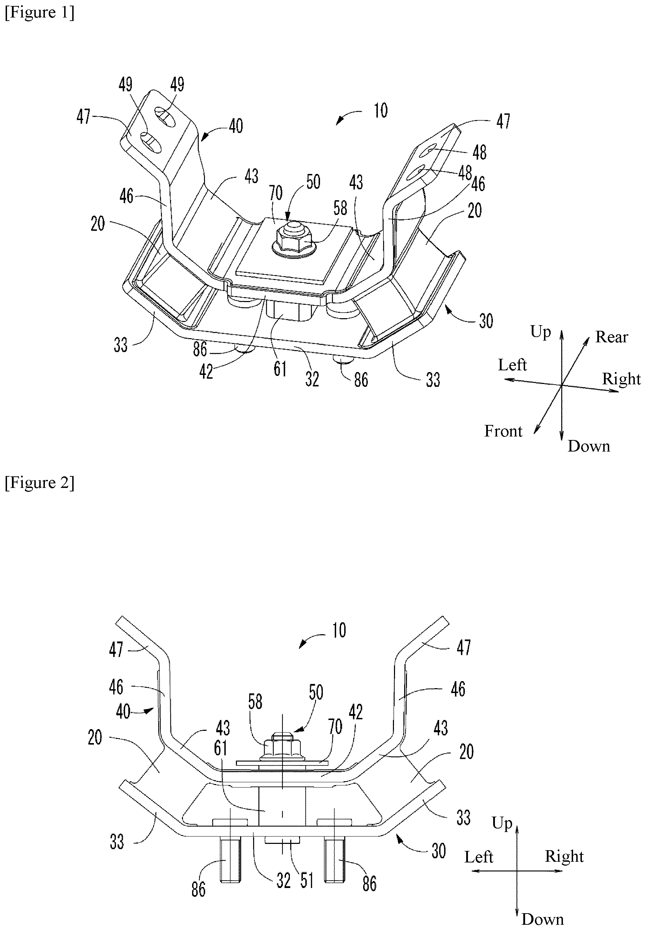

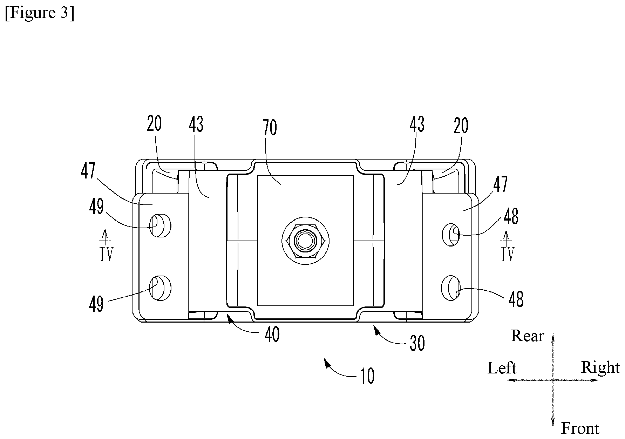

Figure 1, figure 2, figure 3, figure 4, and figure 7 show a vibration damping device 10 as a first embodiment of the present invention. The vibration damping device 10 has a structure where a first attachment member 30 and a second attachment member 40 arranged to face each other, and both end portions of the first attachment member 30 and the second attachment member 40 are elastically connected by a pair of main body rubber elastic bodies 20, 20. In the following description, unless otherwise specified, the axial direction refers to the up-down direction in figure 2, which is the facing direction of the first attachment member 30 and the second attachment member 40, the left-right direction refers to the left-right direction in figure 2, which is the longitudinal direction of the first attachment member 30 and the second attachment member 40, and the front-rear direction refers to the up-down direction in figure 3, which is the width direction of the first and second attachment members 30 and 40.

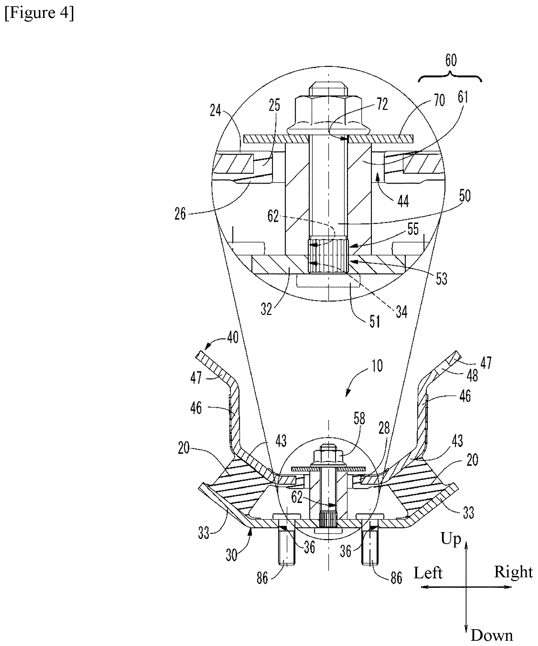

The first attachment member 30 is formed by pressing a metal plate material such as iron or aluminum alloy, and has a longitudinal plate shape as a whole. In addition, in figure 4, figure 8 and figure 9, the first attachment member 30 has a first flat plate portion 32 that extends approximately horizontally in its central portion in the left-right direction, and a first fastening hole 34 is formed penetrating through the first flat plate portion 32.

Further, first inclined plate portions 33, 33 are integrally formed on both left and right sides of the first flat plate portion 32 in the first attachment member 30, and by the first inclined plate portions 33, 33 on the left and right, both left and right end parts of the first attachment member 30 are configured.

Further, two fixing holes 36, 36 are formed in the first flat plate portion 32 of the first attachment member 30, and the first attachment member 30 is fixed to the vehicle body 80 side at the fixing holes 36, 36.

Like the first attachment member 30, the second attachment member 40 is made of a metal plate material such as iron or aluminum alloy, and has an overall shape of a longitudinal plate on the left and right sides. Further, the second attachment member 40 has a second flat plate portion 42 that extends approximately horizontally in its central portion in the length direction, and a rectangular stopper hole 44 that extends in the up-down direction through the central portion of the second flat plate portion 42. is formed. Although the stopper hole 44 is rectangular in this embodiment, it may be circular or polygonal.

Furthermore, a pair of second inclined plate portions 43, 43 are integrally formed on both sides of the second flat plate portion 42 in the length direction. The second inclined plate portions 43, 43 are plate-shaped and are inclined upward in the thickness direction as they go outward in the left-right direction.

Further, it integrally includes a pair of vertical wall parts 46, 46 that protrude upward from the left and right outer end portions of the pair of second inclined plate portions 43, 43, and A pair of attachment pieces 47, 47 are integrally formed therein. The attachment piece 47 extends from the upper end of the vertical wall part 46 at an angle outward from the left and right, and has two bolt holes 48, 49 penetrating in the thickness direction formed at positions spaced apart from each other in the front and back. The pair of left and right attachment pieces 47 constitute both ends of the second attachment member 40 in the left and right direction.

The first attachment member 30 and the second attachment member 40 having such a structure are such that the second attachment member 40 is disposed facing upwardly with respect to the first attachment member 30, and the second flat plate portion 42 and the first flat plate portion 32 are made to face each other in the up-down direction, and the first inclined plate portion 33 and the second inclined plate portion 43 are made to face each other in an inclined direction with respect to the up-down direction. Main body rubber elastic bodies 20, 20 are disposed between the opposing surfaces of the left and right first inclined plate portions 33, 33 and second inclined plate portions 43, 43, respectively, and the first attachment member 30 and The two attachment members 40 are elastically connected by the pair of main body rubber elastic bodies 20, 20 at both ends located on both sides of the first fastening hole 34 and the stopper hole 44.

As shown in figure 4, figure 8 and figure 9, a rectangular stopper hole 44 penetrating in the up-down direction is formed in the center part of the second flat plate portion 42. Rubber layers 24, 25, and 26, which act as a stopper 22 that acts in the up-down direction, left-right direction, and front-rear direction, are provided on the inner peripheral surface of the stopper hole 44, and are integrally attached to the second attachment member 40 at the stopper hole 44. Vulcanized and molded. In this embodiment, a rubber elastic body is vulcanized and formed in the stopper hole 44 portion, but the rubber elastic body is not formed in the stopper hole 44 portion, and the stopper member 61 disposed in the stopper hole 44 is The rubber elastic body may be formed by vulcanization.

As shown in figure 4, figure 5, figure 6 and figure 7, the shaft member 50 has a flange portion 51 arranged at one end in the up-down direction and comprises a first protrusions portion 53 composed of a plurality of first protrusions 52 arranged at a predetermined interval in the circumferential direction, and a second protrusions portion 55 composed of a plurality of second protrusions 54 that extend in the up-down direction in a continuous state with the first protrusions portion 53 composed of the plurality of first protrusions 52 arranged at the predetermined interval in the circumferential direction and are arranged at a predetermined interval in the circumferential direction. In the present embodiment, the first protrusions 52 and the second protrusions 54 have the same shape. That is, in the present embodiment, the first protrusions 52 and the second protrusions 54 are configured as continuous protrusions that are indistinguishable from each other in appearance and extend integrally and continuously in the axial direction. In the present embodiment, the first protrusion 52 and the second protrusion 54 have a triangular shape with a pointed tip facing outward in the radial direction. Of course, the shapes of the first protrusion 52 and the second protrusion 54 may be formed such that the distal ends facing toward the outside in the radial direction have an arc shape, a gear shape (trapezoid shape), or the like. Note that it is preferable that the first protrusion 52 and the second protrusion 54 have a shape in which the width dimension in the circumferential direction gradually decreases toward the protrusion tip side.

As shown in figure 1, figure 3, figure 4 and figure 9, the stopper plate 70 in the up-down direction has a rectangular flat plate shape and has a through hole 72 penetrating in the up-down direction in the center part, into which the shaft member 50 is inserted.

The stopper member 61 is formed of a rectangular parallelepiped, and has a second fastening hole 62 that penetrates in the up-down direction, as shown in figure 1, figure 2, figure 4, figure 7 and figure 9. In the present embodiment, the stopper member 61 has a rectangular parallelepiped shape, but it may also have a cylindrical shape or a prismatic shape.

Figure 4 is a cross-sectional view diagram of the vibration damping device 10. The stopper member 61 is, while being inserted into the stopper hole 44, erected against the first flat part 32 of the first attachment member 30 at its lower end in the up-down direction in a state where the first fastening hole 34 located in the center part of the first flat portion 32 and the second fastening hole 62 penetrating the stopper member 61 in the up-down direction are overlapped. In this erected state, the lower end surface of the stopper member 61 is overlapped with the upper surface of the first flat plate portion 32 in a state of contact. Further, in the present embodiment, the first fastening hole 34 and the second fastening hole 62 are arranged on the same central axis. Further, in the upward direction of the central axis, the entire first fastening hole 34 overlaps with the second fastening hole 62, and the second fastening hole 62 has an opening shape where it widens further to the outer circumferential side than the first fastening hole 34 over its entire circumference. With the stopper member 61 erected on the first flat plate portion 32, the shaft member 50 is inserted from below the first attachment member 30 into the first fastening hole 34 located at the central part of the first flat plate portion 32 constituting the first attachment member 30 and the second fastening hole 62 formed in the stopper member 61 and press-fitted therein. Since the maximum diagonal line (D) of the first protrusions portion 53 and the second protrusions portion 55 arranged on the shaft member 50 is set larger than the diameter (D 1) of the first fastening hole 34 and the diameter (D2) of the second fastening hole 62, when press-fitted, the first protrusions portion 53 and the second protrusions portion 55 bite into the inner peripheral surfaces of the first fastening hole 34 and the second fastening hole 62, respectively. In the biting state, the first protrusions portion 53 formed on the outer peripheral surface of the shaft member 50 and composed of the plurality of first protrusions 52 arranged at the predetermined interval in the circumferential direction is in contact with the inner peripheral surface of the first fastening hole 34 located at the central part of the first flat plate portion 32. The second protrusions portion 55 formed on the outer peripheral surface of the shaft member 50 and composed of the plurality of second protrusions arranged at the predetermined interval in the circumferential direction is in contact with the second fastening hole 62 formed on the inner peripheral surface of the stopper member 61. With the flange portion 51 formed on the shaft member 50 and the lower surface of the first attachment member 30 in contact, the first protrusions portion 52 contacts the first fastening hole 34 and the second protrusions portion 55 contacts the second fastening hole 62 . The shaft member 50, the first attachment member 30, and the stopper member 61 are integrated and fixed. As a result, the occurrence of slipping (movement) is suppressed and the loosening of parts is also suppressed, thereby maintaining the stopper function and reducing or preventing excessive stress to the rubber, thereby the durability of the rubber elastic body can be increased.

The stopper plate 70 is fixed to the upper end surface of the stopper member 61 by screwing the shaft member 50 and the nut 58 together.

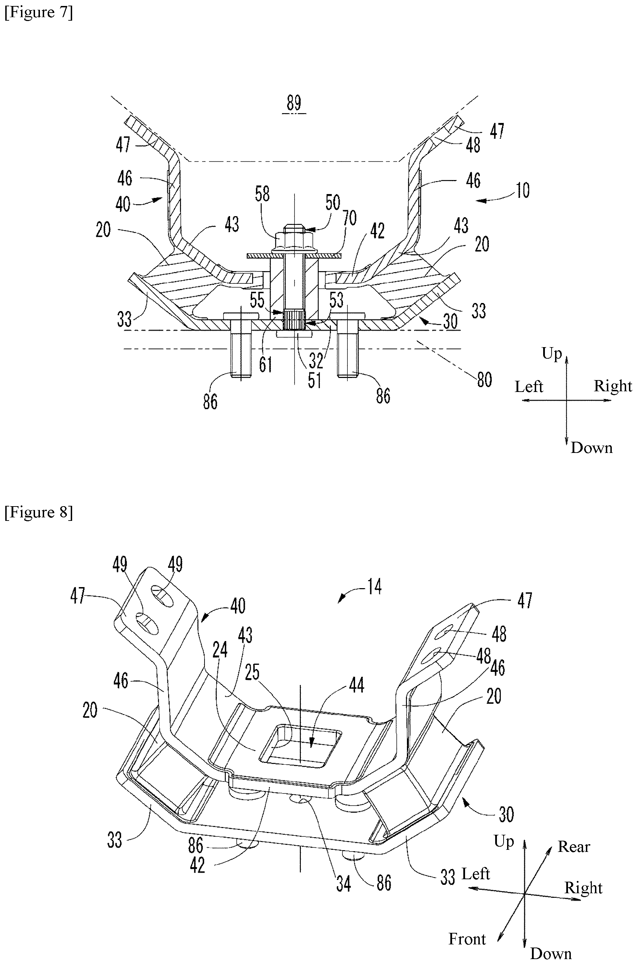

Figure 7 is a cross-sectional view diagram of the vibration damping device shown in figure 1 in which a vibrating body is loaded. The vibrating body 89 is stacked on the upper surfaces of a pair of left and right attachment pieces 47 , 47 arranged at both left and right ends of the second attachment member 40 . It is formed in a pair of left and right attachment pieces 47, 47, and is fixed to two bolt holes 48, 49 penetrating in the thickness direction with bolts or the like (not shown).

In the explanations of figure 4, figure 5 and figure 7, the first protrusions portion 53 and the second protrusions portion 55 are formed on the outer peripheral surface of the shaft member 50, but they may be configured such that the first protrusions portion 53 composed of the plurality of first protrusions 52 arranged at the predetermined interval in the circumferential direction is formed on the inner peripheral surface of the first fastening hole 34 and is brought into contact with the outer peripheral surface of the shaft member 50 and such that a second protrusions portion 55 composed of the plurality of second protrusions 54 extending in the up-down direction in a continuous state to the first protrusions portion 53 and arranged at the predetermined interval in the circumferential direction is formed on the inner peripheral surface of the second fastening hole 62 and is brought into contact with the outer peripheral surface of the shaft member 50. In this case as well, similar to the case where the first protrusions portion 53 and the second protrusions portion 55 are formed on the outer peripheral surface of the shaft member 50, the occurrence of slipping (movement) between the stopper member 61 and the first attachment member 30 is suppressed. Furthermore, the shaft member 50, the first attachment member 30, and the stopper member 61 are integrated, suppressing the occurrence of slipping (movement) and loosening of parts, thereby maintaining the stopper function and thereby reducing or preventing excessive stress to the rubber, thereby the durability of the rubber elastic body can be increased.

The press-fitting state of the shaft member 50 will be explained with reference to figure 4 and figure 7. The first protrusions portion 53 composed of the plurality of first protrusions 52 formed on the outer peripheral surface of the shaft member 50 and arranged at the predetermined interval in the circumferential direction is brought into contact with the inner peripheral surface of the first fastening hole 34 located at the central part of the first flat plate portion 32. Similarly, the second protrusions portion 55 composed of the plurality of second protrusions 54 extending in the up-down direction in a continuous state with the first protrusions portion 53 and arranged at the predetermined interval in the circumferential direction is brought into contact with the second fastening hole 62 formed at the inner peripheral surface of the in the stopper member 61. Then, by press-fitting the shaft member 50 into the first fastening hole 34 and the second fastening hole 62, the first protrusions portion 53 and the second protrusions portion 55 formed on the outer peripheral surface of the shaft member 50 become biting into the inner peripheral surfaces of the first fastening hole 34 and the second fastening hole 62, respectively. In the biting state, the shaft member 50, the first attachment member 30, and the stopper member 61 are integrated.

The second attachment member 40 moves in the up-down direction, the left-right direction, and the front-rear direction due to the vibration of the vibrating body 89. In particular, due to the movement in the left-right direction, the inner peripheral surface of the stopper hole 44 formed in the second attachment member 40 comes into contact with the outer peripheral surface of the stopper member 61 of the second attachment member 40. As a result, slippage (movement) occurs between the stopper member 61 and the first attachment member 30. Since the shaft member 50, the first attachment member 30, and the stopper member 61 are integrated, the occurrence of slipping (movement) is suppressed. Further, by suppressing loosening of the parts, the stopper function is maintained, and the durability of the rubber elastic body is increased by reducing or preventing excessive stress to the rubber.

As shown in figure 2, figure 4 and figure 7, in a state where the flange portion 51 formed on the shaft member 50 and the lower surface of the first attachment member 30 are in contact with each other, the first protrusions portion 53 formed on the outer peripheral surface of the shaft member 50 comes into contact with the first fastening hole 34 formed in the first attachment member 30 , and the second protrusions portion 55 that extends in the up-down direction continuously from the first protrusions portion 53 comes into contact with the second fastening hole 62 formed in the inner peripheral surface of the stopper member 61. By press-fitting the shaft member 50 into the first fastening hole 34 and the second fastening hole 62, the first protrusions portion 53 and the second protrusions portion 55 become biting into and come into contact with the first fastening hole 34 and the second fastening hole 62, respectively. Thereby, the flange portion 51 formed on the shaft member 50, the shaft member 50, the first attachment member 30, and the stopper member 61 are integrated and fixed. In particular, by being press-fitted on the flange portion 51 side and brought into contact in a state where the flange portion 51 is in contact with the lower surface of the first attachment member 30, the shaft member 50 is fixed in a more stable state. As a result, the shaft member 50, the first attachment member 30, and the stopper member 61 are integrated, thereby the occurrence of slippage (movement or rattling) of the stopper member 61 on the surface of the first attachment member 30 when a stopper load is applied, and loosening of parts caused by such slippage are also suppressed. As a result, the function of limiting the relative displacement between the first attachment member 30 and the second attachment member 40 by the stopper function is maintained, and the excessive relative displacement between the first attachment member 30 and the second attachment member 40 is stabilized and prevented, therefore, excessive stress to the rubber can be reduced or prevented, and the durability of the rubber elastic body can also be increased.

In the present embodiment, the shaft member 50, the stopper member 61, and the first attachment member 30 are made of metal material. By making the hardness of the shaft member 50 greater than that of the stopper member 61, the second protrusions portion 55 disposed at the predetermined interval in the circumferential direction on the outer peripheral surface of the shaft member 50 contacts (press-fits into) the inner peripheral surface of the second fastening hole 62, which penetrates the stopper member 61 in the up-down direction, and the second protrusions portion 55 bites more into the inner peripheral surface of the second fastening hole 62, thereby the axial member 50 and the stopper member 61 are more firmly integrated. As a result, the occurrence of slippage (movement) and loosening of parts are further suppressed, and the stopper function is maintained, thereby increasing the durability of the rubber elastic body by reducing or preventing excessive stress to the rubber.

By making the hardness of the shaft member 50 greater than the hardness of the first attachment member 30, the first protrusions portion 52 disposed on the outer peripheral surface of the shaft member 50 at the predetermined interval in the circumferential direction contacts (is press-fitted into) the inner peripheral surface 41 of the first fastening hole 34 that penetrates in the up-down direction and is arranged in the first attachment member 30, and at the same time the first protrusions portion 52 bites more into the inner peripheral surface 41 of the first fastening hole 34, thereby the shaft member 50 and the stopper member 61 are more firmly integrated. As a result, the occurrence of slippage (movement) and loosening of parts are further suppressed, and the stopper function is maintained, thereby increasing the durability of the rubber elastic body by reducing or preventing excessive stress to the rubber.

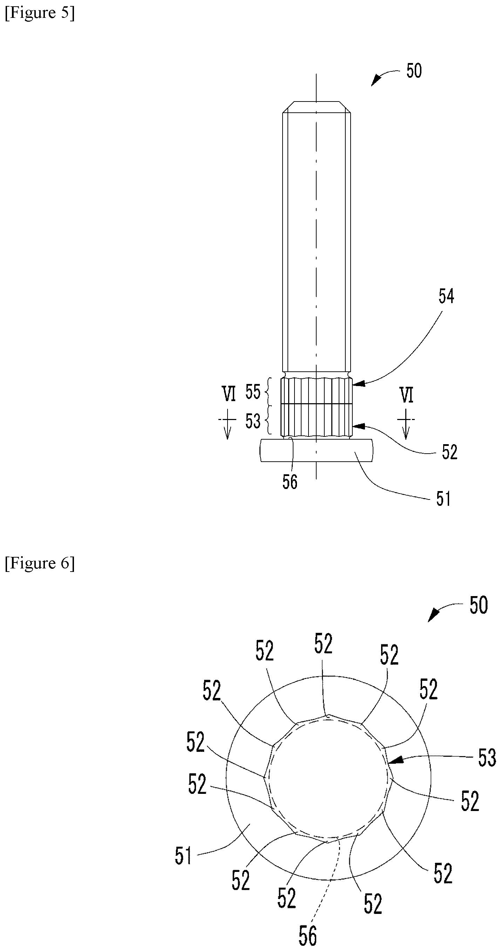

Further, as shown in figure 5 and figure 6, in the shaft member 50 of the present embodiment, the first protrusions 52 are not formed at the base end part of the shaft portion on the side of the flange portion 51, and a groove-like portion 56 is formed that extends in the circumferential direction and has an outer diameter smaller than the outer diameter of the first protrusions portion 53. By providing such a groove-shaped portion 56, it is possible to accommodate debris generated when the first protrusions portion 53 of the shaft member 50 is press-fitted into the first fastening hole 34 of the first attachment member 30 (first flat plate portion 32) in the groove-shaped portion 56. By this, it can be prevented that such debris are caught between the overlapping surfaces of the first flat plate portion 32 and the flange portion 51, and it is therefore possible to stabilize the fixing force of the shaft member 50 and thus the stopper member 61 to the first attachment member 30, which is caused by the lower surface of the first flat plate portion 32 and the flange portion 51 closely overlapping each other.

Next, a manufacturing method for the vibration damping device will be explained with reference to figure 4, as well as figure 8 and figure 9.

The manufacturing method for the vibration damping device 10 comprises a main body portion preparation step of preparing a main body portion 14 and a stopper member arrangement step of arranging the outer peripheral surface of the stopper member 61 to face the inner peripheral surface of the stopper hole 44.

The main body portion preparation step of preparing the main body portion 14 shown in figure 8 will be explained. This is a step of forming the main body portion 14, which is the main body of the vibration damping device 10, excluding the shaft member 50, stopper member 61, stopper plate 70, and nut 58. The first attachment member 30 with fixing bolts 86 attached thereto for fastening to the vehicle body 80, and the second attachment member 40 are placed in a predetermined mold (not shown). Then, an unvulcanized rubber material is injected between the first attachment member 30 and the second attachment member 40, and the rubber material is vulcanized using a conventionally used predetermined vulcanizing device (not shown). In this way, the main body rubber elastic bodies 20, 20 are molded between the first attachment member 30 and the second attachment member 40, and the main body portion 14 is formed.

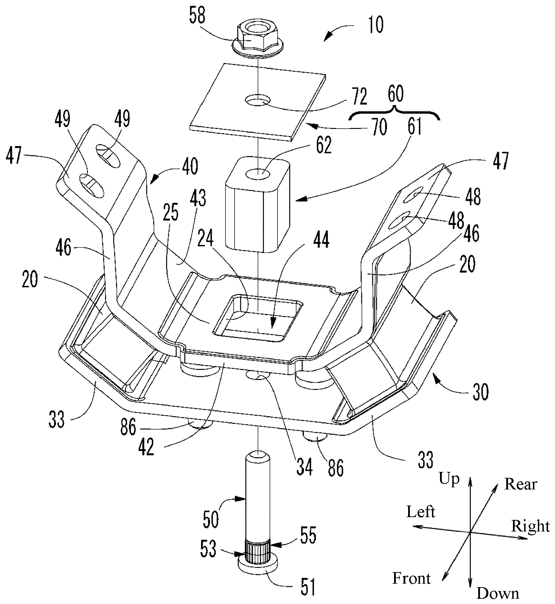

The stopper member arrangement step shown in figure 9 will be explained. The shaft member 50 is press-fitted into the first fastening hole 34 and the second fastening hole 62, and the plurality of protrusions arranged on the outer peripheral surface of the shaft member 50 are brought into contact with the inner peripheral surface of the first fastening hole 34 and the second fastening hole. The stopper member 61 is inserted into the stopper hole 44 formed in the center part of the second attachment member 40. In a state where the second fastening hole 62 formed in the stopper member 61 and penetrating in the up-down direction and the first fastening hole 34 formed in the center part of the first attachment member 30 and penetrating in the up-down direction are overlapped with each other, the stopper member 61 is erected on the first flat plate portion 32 of the first attachment member 30. The shaft member 50 is press-fitted into the first fastening hole 34 and the second fastening hole 62 from below to above the first attachment member 30. By being press-fitted, the first protrusions portion 53 and the second protrusions portion 55 bite into the inner peripheral surfaces of the first fastening hole 34 and the second fastening hole 62, respectively. In the biting state, the plurality of first protrusions portion 53 and second protrusions portion 55 are brought into contact with the first fastening hole 34 formed on the first attachment member 30 and the second fastening hole 62 formed in the stopper member 61, respectively, and are integrated and fixed. As a result, the occurrence of slippage (movement) between the first attachment member 30 and the stopper member 61 is suppressed. Further, by suppressing loosening of the parts, the stopper function is maintained, and excessive stress to the rubber is reduced or prevented, thereby increasing the durability of the rubber elastic body.

In particular, as described above, the press-fit fixing portion of the shaft member 50 into the first fastening hole 34 of the first attachment member 30 and the second fastening hole 62 of the stopper member 61 is provided with a plurality of protrusions in the circumferential direction. This eliminates the need for sophisticated dimensional control, excessive pressing force, and the equipment required to achieve these, which is required when constructing a flat, simple cylindrical surface, and the achievement become easy. Moreover, by applying the press-fitting force or the fixing force to the tip portion of the plurality of protrusions in a concentrated manner, it becomes possible to stably obtain the desired press-fitting fixing force. In addition, as in the embodiment described above, by making the hardness of the member provided with the plurality of protrusions greater than the hardness of the member on the opposite side, such protrusions can be bitten more securely and efficiently and thus it becomes possible to improve and stabilize the contact and fixation state.

Note that the press-fit fixation area due to the contact of the first protrusions portion 53 of the shaft member 50 with the first fastening hole 34 of the first attachment member 30 is, with respect to the thickness dimension of the first flat plate portion 32 (the axis direction length of the first fastening hole 34), desirably to be set to 50% or more, more preferably to be set to 80% or more, and even more preferably to be set substantially over the entire length as in the above embodiment. Further, the press-fit fixation area due to the contact of the second protrusions portion 55 of the shaft member 50 with the second fastening hole 62 of the stopper member 61 is, with respect to the axial direction dimension of the press-fit fixation area due to the contact of the first protrusions portion 53 of the shaft member 50 with the first fastening hole 34, desirably to be set to 80% or more, and more preferably to be set to the same or more length in the axial direction.

In this way, the above-described embodiments are merely illustrative in all respects, and should not be construed in a limiting manner. Furthermore, all modifications and changes that come within the scope of equivalents of the claims are intended to be within the scope of the present invention.

For example, the stopper member 61 does not need to have a straight cylindrical shape that extends over its entire length with a constant cross-sectional shape. Specifically, the base end part (lower end part) and the tip end part (upper end part) may have different cross-sectional shapes, or the tip end part may be integrally formed with an outward flange-shaped portion, thereby the need for a separate stopper may also be eliminated. Furthermore, the outer peripheral surface of the stopper member 61 and the inner peripheral surface of the stopper hole 44 do not need to have similar shapes, and the distance between the opposing surfaces (stopper gap dimension) at which the stopper function is exerted by contacting with each other may be different between in the front-rear direction and in the left-right directions.

Furthermore, the rubber layers 24, 25, and 26 that are vulcanized and bonded to the second attachment member 40 to constitute the stopper 22 may be formed by vulcanized and bonded to the outer peripheral surface of the stopper member 61 as described above. In addition, for example, it is also possible to attach a separate cylindrical stopper rubber to the stopper member 61 in an externally inserted state. Such a stopper rubber may also have different protruding heights from the inner peripheral surface of the stopper hole 44 in the circumferential direction.

Furthermore, the stopper hole 44 formed in the second attachment member 40 is not limited to the simple punched-through hole shown as an example. For example, by integrally forming a cylindrical portion that rises in the axial direction at the inner edge of the opening, or by fixing a separate cylindrical portion by welding or the like, it is also possible to set the stopper contact surface against which the stopper member 61 comes into contact to be large in the axial direction.

Further, the first protrusions 52 and the second protrusions 54 formed at the contact portions of the shaft member 50 and the first fastening hole 34 and the second fastening hole 62 are not limited to the illustrated embodiment. For example, the protrusions may be independent of each other, or the contact part between the shaft member 50 and the first fastening hole 34 and the contact part between the shaft member 50 and the second fastening hole 62 may be provided at a remote location from each other in the axial direction. Further, the diameter dimension of the contact part between the shaft member 50 and the first fastening hole 34 and the diameter dimension of the contact part between the shaft member 50 and the second fastening hole 62 may be different from each other. In particular, in the present embodiment, since the stopper member 61 has a cylindrical shape that is long in the axial direction, it is also possible to set the contact part between the shaft member 50 and the second fastening hole 62 at multiple different locations in the axial direction. Furthermore, the first and second protrusions forming the contact part of the shaft member 50 and the first fastening hole 34 and the second fastening hole 62 are also not limited to an embodiment in which they extend continuously in the axial direction, but may be divided into multiple parts in the axial direction, or may have multiple independent protruding shapes, etc.

Further, the method for manufacturing a vibration damping device according to the present invention is not limited to the specific description of the embodiments. For example, before inserting the stopper member 61 into the stopper hole 44, the shaft member 50 is press-fitted into the first fastening hole 34 of the first attachment member 30 of the main body portion 14 from below and fixed. It may also be in a planted state with respect to the first attachment member 30. After that, a separately prepared stopper member 61 is inserted from above into the stopper hole 44 of the second attachment member 40 of the main body portion 14, and the shaft member 50 is press-fitted from below into the stopper hole 44 and fixed, thereby the stopper member 61 may be fixed to the first attachment member 30 via the shaft member 50.

### Reference Signs List

10 Vibration damping device
14 Main body portion
20 Main body rubber elastic body
22 Stopper
24, 25, 26 Rubber layer
30 First attachment member
32 First flat plate portion
33 First inclined plate portion
34 First fastening hole
36 Fixing hole
40 Second attachment member
42 Second flat plate portion
43 Second inclined plate portion
44 Stopper hole
46 Vertical wall part
47 Attachment piece
48,49 Bolt hole
50 Shaft member
51 Flange portion
52 First protrusion
53 First protrusions portion
54 Second protrusion
55 Second protrusions portion
58 Nut
60 Stopper
61 Stopper member
62 Second fastening hole
70 Stopper plate
72 Through hole
80 Vehicle body
86 Fixing bolt
89 Vibrating body

## Claims

1. A vibration damping device comprising:
a plate-shaped first attachment member having a first fastening hole penetrating in an axial direction;
a second attachment member being a plate-shaped member arranged spaced apart from the first attachment member in the axial direction and having a stopper hole with a hole diameter larger than a hole diameter of the first fastening hole, the stopper hole penetrating in the axial direction and overlapping the first fastening hole in a projection of the axial direction;
a pair of rubber elastic bodies connecting facing surfaces of both end sides of the first attachment member and both end sides of the second attachment member, respectively;
a stopper member being a cylindrical member having a second fastening hole penetrating in the axial direction, the stopper member being inserted into the stopper hole and arranged with its outer peripheral surface facing an inner peripheral surface of the stopper hole; and
a shaft member inserted into the first fastening hole and the second fastening hole to fasten the stopper member to the first attachment member, wherein
a plurality of first protrusions are formed at a predetermined interval in a circumferential direction, on one of either an outer peripheral surface of the shaft member or an inner peripheral surface of the first fastening hole, and in a state where the shaft member is inserted into the first fastening hole, the plurality of first protrusions are in contact with the other of either the outer peripheral surface of the shaft member or the inner peripheral surface of the first fastening hole,
a plurality of second protrusions are formed on one of either the outer peripheral surface of the shaft member or the inner peripheral surface of the second fastening hole at a predetermined interval in the circumferential direction, and in a state where the shaft member is inserted into the second fastening hole, the plurality of second protrusions are in contact with the other of either the outer peripheral surface of the shaft member or the inner peripheral surface of the second fastening hole.

2. The vibration damping device according to claim 1, wherein
each of the plurality of first protrusions and the plurality of second protrusions are both formed on the outer peripheral surface of the shaft member or the inner peripheral surfaces of the first fastening hole and the second fastening hole,
the plurality of first protrusions are formed to extend in the axial direction, and
the plurality of second protrusions are formed to extend in the axial direction in a state of being continuous with the plurality of first protrusions.

3. The vibration damping device according to claim 1 or 2, wherein
the shaft member has a flange portion arranged at one end in the axial direction, and
the plurality of first protrusions are formed from a base of the flange portion on the outer peripheral surface of the shaft member.

4. The vibration damping device according to any one of claims 1 to 3, wherein
the plurality of second protrusions are formed on the outer peripheral surface of the shaft member, and
the shaft member has a hardness greater than a hardness of the stopper member, and an outer diameter including the plurality of second protrusions is larger than the hole diameter of the second fastening hole.

5. The vibration damping device according to any one of claims 1 to 4, wherein
the plurality of first protrusions are formed on the outer peripheral surface of the shaft member, and
the shaft member has a hardness greater than a hardness of the first attachment member, and an outer diameter including the plurality of first protrusions is larger than the hole diameter of the first fastening hole.

6. A manufacturing method for a vibration damping device comprising:
a main body portion preparation step of preparing a main body portion including a plate-shaped first attachment member having a first fastening hole penetrating in an axial direction, a second attachment member being a plate-shaped member arranged spaced apart from the first attachment member in the axial direction and having a stopper hole with a hole diameter larger than a hole diameter of the first fastening hole, the stopper hole penetrating in the axial direction and overlapping the first fastening hole in a projection of the axial direction, and a pair of rubber elastic bodies connecting facing surfaces of both end sides of the first attachment member and both end sides of the second attachment member, respectively; and
a stopper member arrangement step of press-fitting a shaft member with a plurality of protrusions extending in the axial direction at a predetermined interval on its outer peripheral surface, into the first fastening hole and the second fastening hole, while a cylindrical stopper member having a second fastening hole penetrating in the axial direction is inserted into the stopper hole, such that the outer peripheral surface of the stopper member is arranged to face the inner peripheral surface of the stopper hole, while the plurality of protrusions are brought into contact with the inner peripheral surface of the first fastening hole and the inner peripheral surface of the second fastening hole.

7. A manufacturing method for a vibration damping device comprising:
a step of preparing a main body portion including a first attachment member having a first fastening hole in a central part thereof and a second attachment member having a stopper hole in a central part thereof, wherein the first attachment member and the second attachment member are arranged facing each other and connected by a pair of rubber elastic bodies at both side parts of the first attachment member and the second attachment member;
a step of preparing a stopper member having a second fastening hole penetrating in an axial direction, wherein a lower end surface of the stopper member serves as an overlay surface with an upper surface of the central part of the first attachment member, and an upper end part of the stopper member is inserted with a gap into the stopper hole of the second attachment member;
a step of preparing a shaft member having a plurality of protrusions formed on an outer peripheral surface at a predetermined interval in the circumferential direction and extending in the axial direction, the shaft member being to be inserted into the first fastening hole of the first attachment member and the stopper hole of the stopper member;
a step of press-fitting the shaft member into the first fastening hole to bring the plurality of protrusions into contact with the inner peripheral surface of the first fastening hole to fix them, and
a step of press-fitting the shaft member into the second fastening hole to bring the plurality of protrusions into contact with the inner peripheral surface of the second fastening hole to fix them.
